# EUROPEAN PATENT SPECIFICATION

(11) **EP 2 920 646 B1**
(45) Date of publication and mention of the grant of the patent: **05.06.2019**
(21) Application number: 13854425.9
(22) Date of filing: 29.10.2013
(51) Int. Cl.: G03B 35/20, G02B 27/22, A47C 1/12, A47C 3/02, A47C 21/00, A47C 15/00, A47C 3/00, A47C 3/18, A63J 25/00, E04H 3/30, G03B 37/04

(54) **MULTI-PROJECTION SYSTEM AND METHOD COMPRISING DIRECTION-CHANGEABLE AUDIENCE SEATS**
MULTIPROJEKTIONSSYSTEM UND VERFAHREN MIT RICHTUNGSÄNDERBAREN PUBLIKUMSSITZEN
SYSTÈME ET PROCÉDÉ DE MULTIPROJECTION COMPRENANT DES SIÈGES POUR SPECTATEURS À ORIENTATION VARIABLE

(30) Priority: 19.11.2012 KR 20120130821
(43) Date of publication of application: 23.09.2015
(73) Proprietor: CJ CGV Co., Ltd., Seoul 121-835 (KR)
(72) Inventor: KIM, Hwan Chul, Seoul 137-070 (KR); KANG, Su Ryeon, Goyang-si, Gyeonggi-do 411-372 (KR)
(74) Representative: Caspary, Karsten
(86) International application number: PCT/KR2013/009673
(87) International publication number: WO 2014/077528

(56) References cited:
- EP-A1- 0 315 397
- KR-B1- 101 154 143
- KR-Y1- 200 383 828
- US-A- 4 962 420
- US-A- 5 853 330
- US-A- 5 964 064
- US-A1- 2006 028 542

## Description

### Technical Field

The present invention relates to a multi-projection system and, more particularly, to a multi-projection system comprising direction-changeable audience seats, which can change the direction of audience seats depending on a change in multi-projection images projected on a plurality of projection surfaces, thus maximizing the three-dimensional effect and immersion that audiences feel.

### Background Art

Conventionally, in order to reproduce images such as movies, advertisements, etc., two-dimensional images are projected on a single screen arranged in front of a theater. However, audiences can only watch two-dimensional (2D) images under such a system. For example, projection systems are known from US20060028542 A1 and EP0315397 A1.

Three-dimensional (3D) image technologies for providing audiences with 3D images have recently been developed. 3D image technologies use the principle of allowing an audience to feel the 3D effect even from a flat image when different images are presented to the left and right eyes of the audience and combined in the brain. In detail, two cameras equipped with different polarizing filters are used during filming, and the audience wears glasses with polarizing filters such that different images are presented to the left and right eyes during watching.

However, while these 3D technologies can provide audiences with 3D images, the audiences just watch the images reproduced on a single screen, which may reduce the degree of involvement in the images. Moreover, the direction of the 3D effect that the audiences feel is limited to the direction of the single screen.

Furthermore, according to the conventional 3D technologies, the audiences must wear the glasses equipped with polarizing filters during watching, which may make the audiences feel inconvenient, and different images are artificially presented to the left and right eyes, which may make some sensitive audiences feel dizzy or nausea.

Therefore, a so-called "multi-projection system" which can solve the problems of the conventional projection systems based on a single screen has been proposed. The "multi-projection system" refers to a technology in which a plurality of projection surfaces are arranged around audience seats such that synchronized images are reproduced on the plurality of projection surfaces, thus providing audiences with the three-dimensional effect and immersion.

Meanwhile, it is necessary to change the viewing direction of audiences depending on the images projected on the plurality of projection surfaces so as to maximize the 3D effect and immersion that audiences feel from the "multi-projection system". However, there is no technology for changing the viewing direction.

Therefore, there is a need to develop a technology that can change the viewing direction of audiences depending on the images projection on the plurality of projection surfaces, thus maximizing the viewing effect of the "multi-projection system".

### Disclosure of Invention

### Technical Problem

An object of the present invention is to provide a multi-projection system, which can change the viewing direction of audiences depending on images projected on a plurality of projection surfaces, thus maximizing the viewing effect of the multi-projection system.

### Solution to Problem

To achieve the above object, a multi-projection system in accordance with claim 1.

### Advantageous Effects of Invention

The present invention configures conventional audience seat, which are fixedly installed or configured to vibrate only, to be direction-changeable, thus freely changing the viewing direction of audiences on a plurality of projection surfaces.

Moreover, when images projected on the plurality of projection surfaces change, the present invention can change the viewing direction to a direction that matches the change in the images and can maximize the immersion of audiences. Further, in a unique image configuration of the multi-projection system (e.g., a movement of an object in the image between the projection surfaces, an occurrence of a specific event in the image on a specific projection surface among the plurality of projection surface, etc.), the present invention can change the viewing direction to a direction that can maximize the immersion of audiences.

Furthermore, according to the present invention, the audiences need not change their bodies or faces according to various image configurations, which allows the audiences to conveniently view the images reproduced three-dimensionally on the plurality of projection surfaces.

In addition, the present invention can change the direction of the audience seat in response to a user s input, thus changing the viewing direction toward a specific projection surface that the audience wants among the plurality of projection surfaces. Therefore, the audiences can freely change the viewing direction in the images of various viewpoints provided on the plurality of projection surfaces and can feel as if they are actually present in the scene represented by the images.

Additionally, the present invention can change the viewing direction depending on the images projected on the plurality of projection surfaces and, at the same time, provide additional effects, such as scent, wind, temperature, etc., which match the images. Therefore, the present invention can maximize the immersion and reality that the audiences can feel during watching through the change in the viewing direction and the provided additional effects.

### Brief Description of Drawings

FIGS. 1 and 2 are diagrams showing the configuration of a multi-projection system in accordance with an embodiment of the present invention.
FIG. 3 is a diagram showing an example of the operation of an audience seat in accordance with an embodiment of the present invention.
FIGS. 4 to 6 are diagrams showing examples of a plurality of projection surfaces.
FIGS. 7 to 9 are conceptual diagrams showing the change in the viewing direction that can be implemented by a multi-projection system in accordance with an embodiment of the present invention.
FIG. 10 is a diagram showing the configuration of a multi-projection system in accordance with another embodiment of the present invention.
FIG. 11 is a flowchart showing a multi-projection method being not part of the present invention but being useful to its understanding.

### Mode for the Invention

Hereinafter, a multi-projection system according to the present invention will be described in detail with reference to the accompanying drawings. The following embodiments are provided only for illustrative purposes so that those skilled in the art can fully understand the spirit of the present invention, but the present invention is not limited thereby. Moreover, it is to be understood that all matters herein set forth in the accompanying drawings are to be interpreted as illustrative and may be in different forms from those actually implemented.

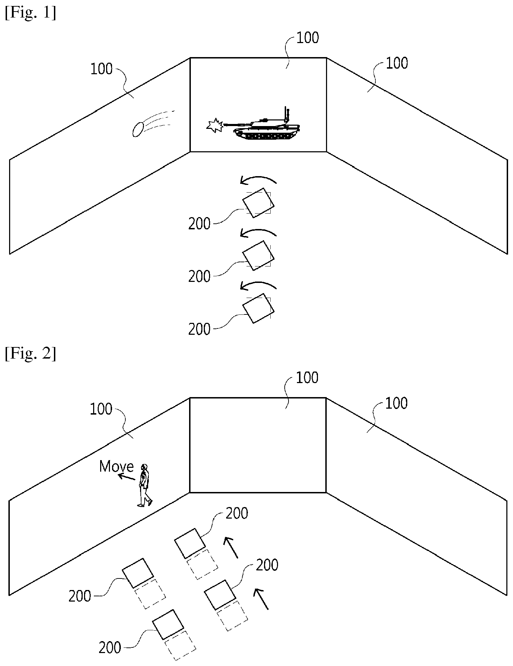

Next, a multi-projection system according to the present invention will be described with reference to FIGS. 1 to 6.

Referring to FIGS. 1 and 2, the multi-projection system in accordance with an embodiment of the present invention comprises a plurality of projection surfaces 100 which are installed in a single theater and an audience seat 200 whose direction can change depending on images projected on the plurality of projection surfaces.

The plurality of projection surfaces 100 are provided for multi-projection in a single theater. A plurality of images may be reproduced on the plurality of projection surfaces 100. Here, the images reproduced on the plurality of projection surfaces 100 may be synchronized with each other based on a synchronization signal. In this case, it is preferable that the images reproduced on the plurality of projection surfaces 100 generally create a unified image. In detail, while different images may be reproduced on the respective projection surfaces 100, it is preferable that the different images are associated with each other to create a unified image when viewed over the entire projection surface.

Of course, according to the embodiments, separate images (e.g., a main image, a descriptive image for the main image, etc.) may be projected on the plurality of projection surfaces 100.

Moreover, according to the invention, the plurality of projection surfaces 100 is arranged so as not to be parallel to each other. According to the prior art, an image is projected only on a screen placed in front of a theater such that an audience watches the image reproduced on the two-dimensional screen or a 3D technology is applied to the image itself reproduced on a plane. On the contrary, according to the present invention, the plurality of projection surfaces 100 are three-dimensionally arranged so as not to be parallel to each other, and thus it is possible to provide the audience with a three-dimensional image with high three-dimensional effect and immersion through the three-dimensionally arranged plurality of projection surfaces 100 without applying the 3D technology to the image itself.

Moreover, according to the invention, the plurality of projection surfaces 100 are arranged to surround the audience seats in the theater. Therefore, the audiences can feel as if they are in a space created by the unified image reproduced on the plurality of projection surfaces 100, and thus the three-dimensional effect, immersion, and virtual reality that the audiences feel can be maximized.

Furthermore, the angle between the projection surfaces 100 is not limited to a specific angle, and the plurality of projection surfaces 100 may be arranged at various angles as long as the audiences can feel the three-dimensional effect.

In addition, the plurality of projection surfaces 100 may be arranged to be adjacent to each other or to be spaced from each other and, even in this case, it is preferable that the plurality of projection surfaces 100 are arranged to surround the audience seats.

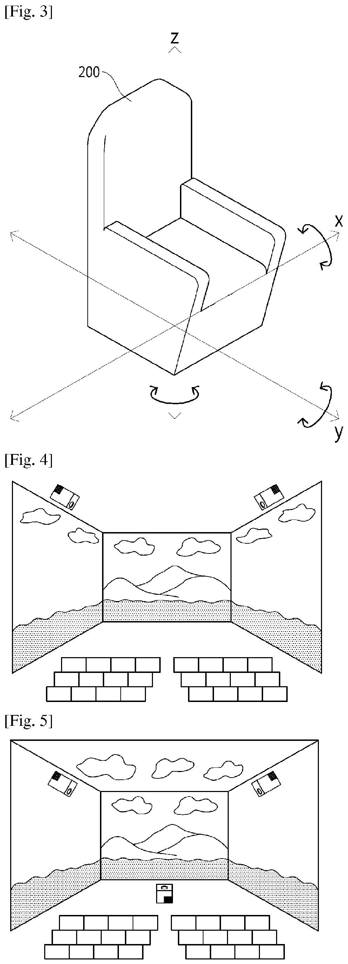

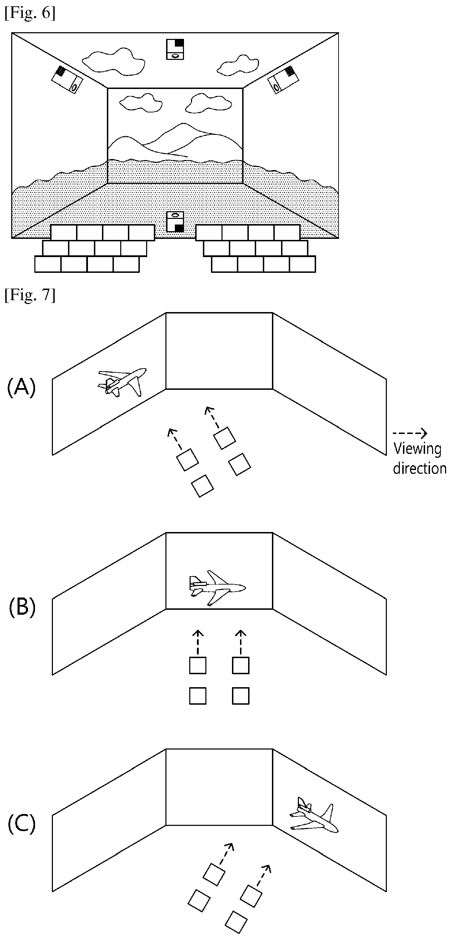

FIG. 4 is a diagram showing an example in which the plurality of projection surfaces 100 are arranged on the front, left, and right sides with respect to the audience seats 200, FIG. 5 is a diagram showing an example in which the plurality of projection surfaces 100 are arranged on the front, left, right, and top sides with respect to the audience seats 200, and FIG. 6 is a diagram showing an example in which the plurality of projection surfaces 100 are arranged on the front, left, right, top, and bottom sides with respect to the audience seats 200.

Moreover, according to the invention, the plurality of projection surfaces 100 is composed of various types of projection surfaces 100 such as a screen and walls.

Meanwhile, the images reproduced on the plurality of projection surfaces 100 may be projected by two or more projection devices installed in the theater, and these two or more projection devices may be implemented by including an optical system and a heating unit in various manners. For example, the projection devices may be implemented in various ways, such as by using a cathode ray tube (CRT), using a liquid crystal display (LCD), by digital light processing (DLP) using a digital micromirror device (DMD) chip, by liquid crystal on silicon (LCoS), etc. Moreover, the two or more projection devices may be electrically connected to an image management device and then integratedly controlled by the image management device, and the images can be projected on the plurality of projection surfaces 100 under the control of the image management device.

The audience seats 200 are configured to allow audiences to easily view the images reproduced on the plurality of projection surfaces 100.

It is preferable that these audience seats 200 are arranged to be surrounded by the plurality of projection surfaces 100 in the theater, because this arrangement allows the audiences sitting on the audience seats 200 to feed as if they are in a space created by the images, thus maximizing the reality and immersion that the audiences feel.

Moreover, it is preferable that the audience seats 200 movably installed, not fixedly, while being surrounded by the plurality of projection surfaces 100. In the conventional projection system, the image is provided only on a single projection surface 100 arranged in front thereof, and thus the audience seats 200 are fixed toward the single projection surface 100. However, in the present invention, the images are provided on the plurality of the projection surfaces 100 that surround the audience seats 200, and thus the audience seat 200 are movably provided. Specifically, it is preferable that the audience seats 200 are configured to freely change their direction and move between the projection surfaces 100.

Referring to FIG. 1, the direction of the audience seat 200 may be changed by a rotational motion. In detail, the direction of the audience seat 200 can be changed toward a specific projection surface 100 (such as the front, left, right, floor, ceiling, etc.) among the plurality of projection surfaces 100, thus also changing the viewing direction of the audiences. According to the invention, the viewing direction of the audience seat 200 is to be changed in synchronized with a movement of an object in the image, an occurrence of an event in the image, or a change in environment in the image, which maximizes the three-dimensional effect and reality that the audiences feel, thus allowing the audiences to conveniently view the images projected on the plurality of projection surfaces 100. Moreover, the speed of the rotational motion may be changed depending on the image. For example, in a landscape scene, a non-dynamic scene, etc, the rotational motion may be performed at a low speed, and in a chase scene, a horror scene, etc., the rotational motion may be performed at a higher speed.

Referring to FIG. 2, the audience seats 200 may move to be close to or far from the specific projection surface 100. Specifically, the audience seat 200 may be configured to perform a linear motion in various axial directions. This linear motion can further maximize the reality and immersion that the audiences feel. Meanwhile, it is preferable that the linear motion of the audience seat 200 is performed in synchronization with the images projected on the plurality of projection surfaces 100, like the rotational motion. For example, when an object in the image moves far from a specific projection surface 100 or comes out of the projection surface 100, the audience seat 200 may perform the linear motion to be close to or far from the projection surface 100 in synchronization with the movement of the corresponding object. Moreover, when a specific event (e.g., explosion) occurs in the image on the specific projection surface 100, the audience seat 200 may perform the linear motion to be close to or far from the specific projection surface 100 in response to the occurrence of the corresponding explosion and may perform the linear motion in response to other image changes.

Meanwhile, the audience seat 200 may also perform a motion of leaning back. Therefore, this motion can naturally change the viewing direction of the audiences toward the projection surface provided on the top side (e.g., ceiling surface) (for reference, the operation of changing the viewing direction of the audiences toward the projection surface provided on the top side (e.g., ceiling surface) may be achieved by a three-dimensional rotational motion of the audience seat 200, but may also be achieved by the motion of leaning back).

The above-described audience seat 200 may be implemented in various ways so as to perform the linear motion or rotational motion.

In particular, it is preferable that the audience seat 200 is configured to perform the rotational motion about various rotational axes, which are present three-dimensionally, so as to freely change the direction between the projection surfaces 100 installed in the theater. Moreover, it is preferable that the audience seat 200 is configured to perform the linear motion in various directions so as to be freely close to or far from all of the projection surfaces 100.

For example, referring to FIG. 3, the audience seat 200 may be configured to perform the rotational motion about three axes (x, y, and z) perpendicular to each other. Moreover, the rotational motions about the respective axes may be performed at the same time (e.g., the rotational motions about x and y axes may be performed at the same time, and the rotational motions about y and z axes may be performed at the same time). Meanwhile, these rotational motions may be implemented by various mechanisms, such as by a using universal join, for example (For reference, the operation of changing the direction in this example is performed as follows: the direction of the audience seat 200 may be changed between the left, front, and right projection surfaces by the rotation about z axis and may be changed toward the top side (e.g., ceiling surface) by the rotation about x axis. Moreover, the rotational motions about the respective axes may be performed at the same time to implement a dynamic change in the direction).

Moreover, the audience seat 200 may be configured to freely rotate about any rotational axes that are present three-dimensionally. For example, the audience seat 200 may be connected to the floor by means of a ball joint and may be configured to rotate about various rotational axes, which are present three-dimensionally, by means of the ball joint.

Meanwhile, the audience seat 200 may be configured to perform the linear direction in various directions in three-dimensional space. The linear motion of the audience seat may be implemented by various mechanisms such as casters/brake mechanism, rail mechanism, support shaft height adjustment mechanism, etc.

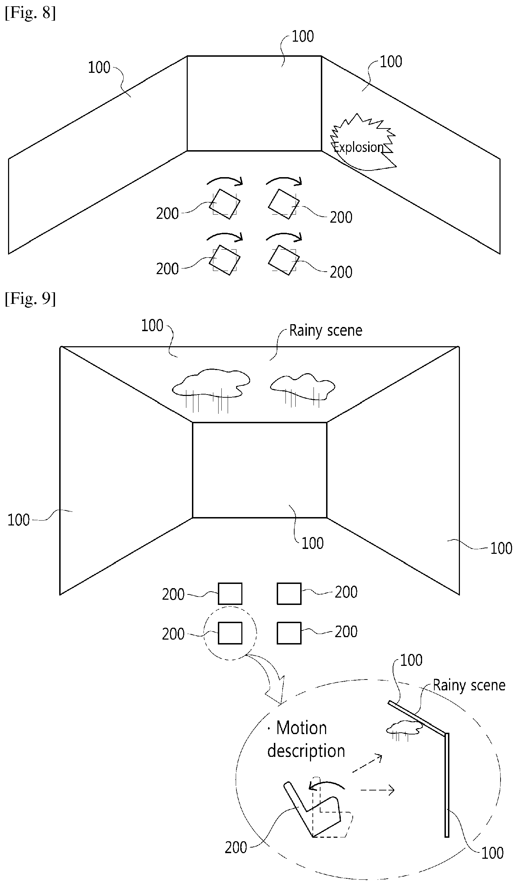

Next, the operation of changing the direction of the audience seats 200 will be described with reference to FIGS. 7 and 9.

As briefly described above, the operation of changing the direction of the audience seats 200 may be performed in synchronization with the images projected on the plurality of projection surfaces 100. FIGS. 7 to 9, which will be described below, shows several examples of the operation of changing the direction of the audience seats 200, and the operation of changing the direction of the audience seats 200 is not limited by the following examples.

Referring to FIG. 7, when an object in the image moves between the projection surfaces, the direction of the audience seats 200 may be changed toward a projection surface on which the object in the image is present. Specifically, when an object (e.g., aircraft) in the image sequentially moves from the left projection surface (A) to the middle projection surface (B) and to the right projection surface (C) as shown in FIG. 7, the direction of the audience seats 200 may be sequentially changed from the left projection surface (A) to the middle projection surface (B) and to the right projection surface (C) in synchronization with the movement of the object. Therefore, the audiences can naturally change their viewpoints through the direction change of the audience seats 200 in synchronization with the movement of the object in the image, thus improving the immersion and three-dimensional effect that the audiences feel from the images.

Referring to FIG. 8, when a specific event in the image occurs only in an image on a specific projection surface (e.g., the front, left, or right side, ceiling, floor, etc.) among the plurality of projection surfaces 100, the direction of the audience seats 200 may be changed toward the specific projection surface. Specifically, when an event (e.g., explosion, appearance of a character, etc.) in the image occurs on the right projection surface as shown in FIG. 8, the direction of the audience seats 200 may be changed toward the right projection surface. Therefore, the audiences can naturally change their viewpoints through the direction change of the audience seats 200 in synchronization with the occurrence of the event in the image, thus improving the immersion and three-dimensional effect that the audiences feel from the images.

Referring to FIG. 9, when a natural phenomenon (e.g., weather change, sunrise, sunset, aurora, meteorite, meteor, etc.) in the image changes, the direction of the audience seats 200 may be changed toward the projection surface provided on the top side. Specifically, when a natural phenomenon (e.g., weather) in the image changes as shown in FIG. 9, the direction of the audience seats 200 may be changed toward the projection surface on the top side such that the audiences can realistically experience the change of the natural phenomenon. Therefore, the audiences can naturally change their viewpoints through the direction change of the audience seats 200 in synchronization with the change of the natural phenomenon in the image, thus improving the immersion and three-dimensional effect that the audiences feel from the images.

For reference, the operation of directing the audience seats 200 toward the top side (e.g., ceiling surface) may be achieved by the three-dimensional rotational motion or by the motion of leaning back as mentioned above.

Meanwhile, the motion of the audience seat 200 may be automatically controlled by an electronic device or manually controlled by a user s input or may be controlled both automatically and manually.

First, the automatic control will be described. The rotational or linear motion of the audience seat 200 may be automatically controlled by an electronic device connected to the audience seat 200. Here, the electronic device may be a server externally connected to the audience seat 200 or an arithmetic unit installed in the audience seat 200. The electronic device controls the motion of the audience seat 200 based on control information. The control information may include time information for synchronization with the images projected on the plurality of projection surfaces and operation information about detailed motions (such as linear and rotational motions) to be performed at a corresponding time. Therefore, the electronic device can synchronize the motions of the audience seats 200 with the images projected on the plurality of projection surfaces 100 based on the control information, thus maximizing the three-dimensional effect and immersion of the audiences.

Next, the manual control will be described. The audience seat 200 may comprise a user input unit for receiving an operation command from a user to be manually controlled by the user input unit. Here, the user input unit may comprise an input device such as a button, a tough panel, etc., through which the audience s command is input, and the audience seat 200 performs the linear or rotational motion in response to the input command. Therefore, the audiences can freely change the viewing direction between the projection surfaces by the manual control and can feel as if they are actually present in the scene represented by the images. Meanwhile, the audience may control his or her seat so as not to move (such as linear motion, rotational motion, etc.) by manipulating the input unit, if he or she does not want the motion of the audience seat 200. Therefore, the audience can operate the audience seat 200 according to his or her intention.

Lastly, the audience seat 200 may be configured to be controlled both automatically and manually. In this case, it is preferable that the audience seat 200 is basically controlled automatically by the electronic device connected thereto and switched to a manual control mode in response to the user s selection during the automatic control.

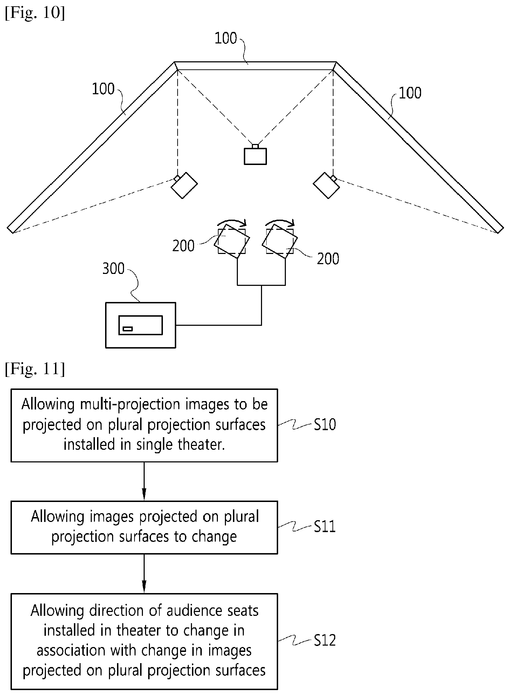

Next, a multi-projection system in accordance with another embodiment of the present invention will be described with reference to FIG. 10.

Referring to FIG. 10, the multi-projection system in accordance with another embodiment of the present invention may comprise a seat control device 300 for controlling the operation of the audience seats 200.

Here, it is preferable that two or more audience seats 200 are installed in the theater and the seat control device 300 integratedly controls the two or more audience seats 200.

The seat control device 300 is a device that controls the two or more audience seats 200. The seat control device 300 may be electrically connected to the two or more audience seats 200 to control the operation of the audience seats 200. Moreover, the seat control device 300 may preferably be connected in parallel to the two or more audience seats 200 to control the respective audience seats 200 either simultaneously or individually. Meanwhile, the seat control device 300 may be connected to the two or more audience seats 200 in a wired or wireless manner.

Moreover, the seat control device 300 may transmit a control signal to the audience seats 200 to control the rotational or linear motion of the audience seats 200. The control signal may include time information data and operation information data. The time information data may include time point information at which the audience seats 200 are to operate, and the operation information data may include detailed operation information (on the rotational motion or linear motion). Therefore, two or more audience seats 200 can be synchronized with the images, projected on the plurality of projection surfaces 100, based on the time information data and can perform an appropriate motion (such as rotational motion or linear motion) that can match the multi-projection images. Meanwhile, it is preferable that the time information data is generated based on time codes of multi-projection image contents (such as digital cinema package, digital screen advertising, etc.) such that the two or more audience seats 200 can be easily synchronized with the multi-projection image contents.

According to the invention, the seat control device 300 also controls the movement speed of the audience seats 200. Specifically, the seat control device 300 controls the movement speed of the audience seats 200 based on the operation information data including movement speed information such that the audience seats 200 can operate at different speeds depending on the type of the image. For example, in a landscape scene, the seat control deice 300 may control the motion (such as rotational motion or linear motion) of the audience seats 200 at a low speed, and in a chase scene, a horror scene, etc., the motion of the audience seats 200 may be performed at a higher speed.

Meanwhile, the seat control device 300 may be implemented with various electronic devices. For example, the seat control device 300 may be implemented in a single server or in such a manner that two or more servers are interconnected. Moreover, the seat control device 300 may be implemented in such a manner that a server and other electronic devices are interconnected or implemented in arithmetic units other than the server.

Moreover, the seat control device 300 may be configured in the form of an integrated management device which is combined with an image management device which integratedly controls the two or more projection devices. Specifically, an integrated management device, which can perform all of the functions of the image management device and the seat control device 300, may be configured (preferably, in the form of a server) to control the projection devices and the audience seats 200. Here, the integrated management device may synchronize the two or more projection devices with the two or more audience seats 200 based on a common synchronization signal and may be connected in parallel to the respective devices to control the respective devices either simultaneously or individually.

Furthermore, the audience seat 200 may comprise a user input unit and may be switched to a manual mode in response to a user s selection. When the audience seat 200 is switched to the manual mode, the audience seat 200 is not controlled by the seat control device 300 but freely performs the rotational or linear motion in response to a command input through the user input unit.

Meanwhile, when the seat control device 300 is connected to the image management device to constitute an integrated management device, the integrated management device can correct image contents which are to be projected by the two or more projection devices and allow the corrected image contents to be projected on the plurality of projection surfaces 100 through the two or more projection devices.

Here, the integrated management device may correct the image contents based on information on the two or more projection devices or information on the plurality of projection surfaces 100. In this case, it is preferable that the correction of the image contents is performed so as to offset the difference in properties (brightness, color, image quality, material, structure, etc.) of the plurality of projection surfaces 100 or the difference in properties (lamp output, resolution, etc.) of the two or more projection devices (so as to create synchronized and unified images on the plurality of projection surfaces).

First, the correction of the image contents performed by the integrated management device based on the information on the plurality of projection surfaces 100 will now be described. The integrated management device may correct the image contents based on the information on the properties of the plurality of projection surfaces 100. Specifically, the integrated management device may correct the image contents so as to offset the difference in properties based on the information on the difference in properties (such as a difference in chromaticity, a difference in brightness, a difference in reflectivity, etc.) between the projection surfaces 100.

Representatively, the correction based on the information on the difference in chromaticity between the projection surfaces 100 will now be described (the process which will be described below can, of course, be applied to the correction based on the difference in brightness, difference in reflectivity, etc.). First, the integrated management device may calculate the information on the difference in chromaticity between the projection surfaces 100 based on chromaticity information of the respective projection surfaces 100. In detail, the integrated management device may set a single reference projection surface and then calculate information on a relative difference in chromaticity of each projection surface. For example, the information on the relative difference in chromaticity is calculated in such a manner that "projection surface A has a red (R) color level 50 higher than that of the reference projection surface, a green (G) color level 40 higher than that of the reference projection surface, and a blue (B) color level the same as that of the reference projection surface". After the information on the difference in chromaticity of the respective projection surfaces is calculated in this manner, the images may be corrected based on the calculated information in such a manner so as to "reduce the R color level of the image projected on projection surface A by 50, reduce the G color level by 40, and maintain the B color level", for example. Therefore, the difference in chromaticity of the projection surfaces can be offset.

Meanwhile, the analysis of the difference in properties of the plurality of projection surfaces 100 may be performed in various ways other than the method of setting the reference projection surface. For example, it is possible to calculate representative values (e.g., mean values, median values, mode values, etc.) for the properties of the plurality of projection surfaces 100 and then analyze the relative difference in properties based on the calculated representative values.

Moreover, the correction of the image contents performed by the integrated management device based on the information on the two or more projection devices will now be described. The integrated management device corrects the image contents based on the information on the properties of the projection devices. According to the invention, the integrated management device corrects the image contents so as to offset the difference in properties based on the information on the difference in properties (such as a difference in contrast, difference in brightness, difference in resolution, difference in image quality due to physical distance, etc.) between the two or more projection devices.

Representatively, the correction based on the information on the difference in brightness between the two or more projection devices will now be described (the process which will be described below can, of course, be applied to the correction based on the difference in contrast, difference in resolution, difference in image quality etc.). First, the integrated management device may offset the difference in brightness between the projection devices by correction. For example, if it is assumed that the brightness of projection device A is 500 ANSI Lumens, the brightness of projection device B is 1000 ANSI Lumens, and the brightness of projection device C is 1500 ANSI Lumens, this difference in brightness may be offset by the image correction. In detail, the brightness ratio of the images projected by projection devices A, B, and C is corrected to 3:2:1, thus offsetting the heterogeneity of the images which may occur due to the difference in brightness between the devices.

Meanwhile, the multi-projection system in accordance with still another embodiment of the present invention may further comprise an additional effect device which is installed in the audience seat 200 to implement an additional effect that matches the images projected on the plurality of projection surfaces 100.

The additional effect device is a device for implementing the additional effect other than the images projected on the plurality of projection surfaces 100. Specifically, the additional effect device is a device that adds an effect of increasing the visual reality or adds an effect that can be perceived by other senses than sight so as to increase the immersion and reality that the audiences can feel while watching multi-projection images. The additional effects that can be provided by the additional effect device may include a sound effect, a wind effect, a smell effect, a fog effect, a temperature change effect, a laser effect, a light effect, a bubble effect, a vibration effect, a tickling effect, etc. as well as various effects associated with the five senses of human. Therefore, the additional effect device may comprise various devices such as a speaker, an air blower, a fragrance diffuser, a fog machine, a heater, a cooler, a laser device, a bubble generator, an LED, an air shot (a face air shot, a side air shot, etc.), a water shot, a tickler (a butt ticker, a leg ticker, etc.), a butt kicker, a vibration device, etc. which can stimulate the five senses of human (For reference, the air shot is a device that injects air to the audience sitting on the audience seat 200 through an injection nozzle, the water shot is a device that injects water to the audience through an injection nozzle, and the tickler or kicker is a device that tickles the audience by pricking or striking with a predetermined intensity or at a predetermined cycle).

Moreover, the additional effect system may preferably be controlled in conjunction with the linear motion or rotational motion of the audience seat 200, specifically in conjunction with the control signal transmitted from the seat control device 300. Therefore, in this case, the control signal transmitted from the seat control device 300 may include both operation information data for the motion (such as rotational motion or linear motion) of the audience seats 200 and operation information data for the operation of the additional effect device, and these operation information data included in the control signal may match the time information data.

Meanwhile, the multi-projection system may further comprise additional effect devices, which are installed in other spaces in the theater, other than the additional effect device installed in the audience seat 200. For example, the multi-projection system may further comprises additional effect devices installed in various locations of the theater, such as the space between the audience seats 200 and the projection surfaces 100, the periphery of the plurality of projection surfaces, etc. Therefore, it is possible to implement dual additional effect devices through the additional effect devices installed in the audience seats 200 and the additional effect devices further installed in the theater, thus further maximizing the reality and immersion that the audiences feel.

The above-described audience seat 200 including the additional effect device may perform the motion (such as rotational motion or linear motion) in synchronization with the images projected on the plurality of projection surfaces 100 or implement an additional effect that matches the images. Moreover, the audience seat 200 may implement the motion operation (such as rotational motion or linear motion) and the additional effect at the same time.

For example, when an object in the image moves between the projection surfaces, the direction of the audience seat 200 may be changed toward a projection surface on which the object in the image is present, and the additional effect associated with the object in the image may be implemented at the same time. Referring to FIG. 7, when an object (e.g., aircraft) in the image moves from the left projection surface (A) to the middle projection surface (B) and to the right projection surface (C), the viewing direction of the audience seat 200 may be changed by the rotational motion and, at the same time, the additional effect associated with the object may be implemented (e.g., wind generated when the aircraft flies is provided by the air shot).

Moreover, when a specific event in the image occurs only on a specific projection surface among the plurality of projection surfaces, the direction of the audience seat 200 may be changed toward the specific projection surface, and an additional effect associated with the specific event may be implemented. Referring to FIG. 8, when an event (e.g., explosion) occurs in the image on the right projection surface, the audience seat 200 may perform the rotational motion toward the right projection surface and, at the same time, implement an additional effect associated with the event (e.g., temperature rise due to the explosion is implemented by a heater, a smoke generation is implemented by a fog machine, etc.).

Next, a multi-projection method being not part of the present invention will be described with reference to FIG. 11.

Referring to FIG. 11, the multi-projection method being not part of the present invention may comprise the step (S10) of allowing multi-projection images to be projected on a plurality of projection surfaces installed in a single theater.

After step S10, the images projected on the plurality of projection surfaces are to change (S11).

Here, the change in the images may include various changes such as a movement of an object in the image between the projection surfaces, an occurrence of a specific event in the image on a specific projection surface among the plurality of projection surface, a change in environment such as a natural phenomenon in the image, etc.

When the images projected on the plurality of projection surfaces have changed in step S11, the direction of the audience seats changes in synchronization with the change in the images (S12).

Here, the audience seats perform a rotational motion in synchronization with the change in the images, and thus the direction of the audience seats changes. Moreover, the audience seats may be configured to provide various additional effects in conjunction with the rotational motion.

Meanwhile, the multi-projection being not part of the invention, may be implemented in the form of a program and then stored in a recording medium readable by an electronic device or transmitted and received through a communication network. Moreover, the multi-projection method may be implemented in the form of a program and then temporarily or permanently stored in various electronic devices.

Furthermore, the above-described multi-projection method being not part of the present invention may have substantially the same features as the multi-projection system according to the present invention, while they are in different categories. Thus, the above-described features associated with the multi-projection system may be easily adapted and applied to the multi-projection method.

While the invention has been shown and described with reference to certain preferred embodiments thereof, it will be understood by those skilled in the art that various changes in form and details may be made therein without departing from the scope of the invention as defined by the appended claims. Therefore, the scope of the invention is defined not by the detailed description of the invention but by the appended claims.

## Claims

1. A multi-projection system comprising:
a plurality of projection surfaces (100) capable of being installed in a single theatre;
at least one audience seat (200) whose direction is configured to be changed depending on images projected on the plurality of projection surfaces (100); and
a seat control device (300) for controlling the operation of the at least one audience seat (200), wherein the seat control device (300) is configured to transmit a control signal to the at least one audience seat (200), and the control signal includes time information and operation information, said operation information including movement speed information so that the audience seats (200) are capable of being operated at different speeds depending on the type of image,
**characterized in that**:
the plurality of projection surfaces (100) are composed of a screen and walls, wherein the plurality of projection surfaces (100) are arranged so as not to be parallel to each other and are arranged to surround the at least one audience seat (200);
the operation of each audience seat (200) is synchronized with the images, projected on the plurality of projection surfaces (100), based on time information, such that when an object in an image projected on a first projection surface moves to a second projection surface, the seat control device (300) is configured to control the audience seat (200) to change the viewing direction toward the second projection surface, and
it further comprises an integrated management device configured to correct the image contents so as to offset the difference in properties based on the information on the difference in properties between the two or more projection surfaces (100).

2. The multi-projection system of claim 1, wherein the direction of the at least one audience seat (200) is configured to be changed toward a specific projection surface (100) among the plurality of projection surfaces (100) by a rotational motion.

3. The multi-projection system of claim 2, wherein the at least one audience seat (200) is configured to perform the rotational motion about rotational axes that are present three-dimensionally, and the direction of each audience seat (200) is configured to be changed toward each projection surface (100) by the rotational motion.

4. The multi-projection system of claim 2, wherein the at least one audience seat (200) is configured to move to be close to or far from the specific projection surface (100).

5. The multi-projection system of claim 1, wherein when a specific event in the image occurs only in an image on a specific projection surface (100) among the plurality of projection surfaces (100), the direction of the at least one audience seat (200) is configured to be changed toward the specific projection surface (100).

6. The multi-projection system of claim 1, wherein the seat control device (300) integratedly controls the one or more audience seats (200).

7. The multi-projection system of claim 1, wherein the operation information includes speed information, and the seat control device (300) is configured to change the speed information depending on the images projected on the plurality of projection surfaces (100).

8. The multi-projection system of claim 1, wherein the at least one audience seat (200) comprises a user input unit, and the direction of each audience seat (200) is configured to be changed depending on information input through the user input unit.

9. The multi-projection system of claim 1, wherein the at least one audience seat (200) comprises an additional effect device which is configured to implement an additional effect that matches the images projected on the plurality of projection surfaces (100).

10. The multi-projection system of claim 9, wherein the additional effect includes a vibration effect, a tickling effect, an air shot effect, or a water shot effect.

## Patentansprüche

1. Multiprojektionssystem mit:
einer Mehrzahl von Projektionsflächen (100), die in einem einzigen Theater installierbar sind;
mindestens einem Publikumssitz (200), dessen Richtung dazu eingerichtet ist, dass sie in Abhängigkeit von Bildern, die auf die Mehrzahl von Projektionsflächen (100) projiziert werden, änderbar ist; und
einer Sitzsteuerungsvorrichtung (300) zum Steuern des Betriebs des mindestens einen Publikumssitzes (200), wobei die Sitzsteuerungsvorrichtung (300) dazu eingerichtet ist, um ein Steuersignal an den mindestens einen Publikumssitz (200) zu übertragen, und wobei das Steuersignal Zeitdaten und Betriebsdaten umfasst, wobei die Betriebsdaten eine Bewegungsgeschwindigkeit umfassen, sodass die Publikumssitze (200) in Abhängigkeit von der Art des Bildes mit verschiedenen Geschwindigkeiten betreibbar sind;
**dadurch gekennzeichnet, dass**
die Mehrzahl von Projektionsflächen (100) aus einem Bildschirm und aus Wänden besteht, wobei die Mehrzahl von Projektionsflächen (100) so angeordnet ist, dass sie nicht parallel zueinander sind und so angeordnet sind, dass sie mindestens einen Publikumssitz (200) umgeben;
der Betrieb eines jeden Publikumssitzes (200) mit den Bildern, die auf die Mehrzahl von Projektionsflächen projiziert werden, auf Basis der Zeitdaten synchronisiert ist, so dass, wenn sich ein Objekt in einem Bild, das auf eine erste Projektionsfläche projiziert wird, zu einer zweiten Projektionsfläche bewegt, die Sitzsteuerungsvorrichtung (300) derart eingerichtet ist, um den Publikumssitz (200) so zu steuern, dass die Blickrichtung in Richtung auf die zweite Projektionsfläche verändert wird, und
es weiterhin eine integrierte Verwaltungsvorrichtung aufweist, die eingerichtet ist, um die Bildinhalte so zu korrigieren, dass der Unterschied der Eigenschaften auf Basis der Information über den Unterschied der Eigenschaften zwischen den beiden oder mehreren Projektionsflächen (100) kompensiert wird.

2. Multiprojektionssystem nach Anspruch 1, wobei die Richtung des mindestens einen Publikumssitzes (200) so eingerichtet ist, dass sie in Richtung auf eine spezielle Projektionsfläche (100) einer Mehrzahl von Projektionsflächen (100) durch eine Drehbewegung änderbar ist.

3. Multiprojektionssystem nach Anspruch 2, wobei der mindestens eine Publikumssitz (200) eingerichtet ist, um die Drehbewegung um Drehachsen auszuführen, die dreidimensional vorhanden sind, und wobei die Richtung eines jeden Publikumssitzes (200) so eingerichtet ist, dass sie in Richtung auf jede Projektionsfläche (100) durch die Drehbewegung änderbar ist.

4. Multiprojektionssystem nach Anspruch 2, wobei der mindestens eine Publikumssitz (200) so eingerichtet ist, dass er nahe an der speziellen Projektionsfläche (100) oder entfernt von dieser bewegbar ist.

5. Multiprojektionssystem nach Anspruch 1, wobei, wenn ein spezielles Ereignis in dem Bild nur in einem Bild an einer speziellen Projektionsfläche (100) der Mehrzahl von Projektionsflächen (100) stattfindet, die Richtung des mindestens einen Publikumssitzes (200) eingerichtet ist, dass sie in Richtung auf die spezielle Projektionsfläche (100) änderbar ist.

6. Multiprojektionssystem nach Anspruch 1, wobei die Sitzsteuerungsvorrichtung (300) einen oder mehrere Publikumssitze (200) zusammen steuert.

7. Multiprojektionssystem nach Anspruch 1, wobei die Betriebsdaten Geschwindigkeitsdaten umfassen, und wobei die Sitzsteuerungsvorrichtung (300) eingerichtet ist, um die Geschwindigkeitsdaten in Abhängigkeit von den Bildern, die auf die Mehrzahl von Projektionsflächen (100) projiziert werden, zu ändern.

8. Multiprojektionssystem nach Anspruch 1, wobei der mindestens eine Publikumssitz (200) eine Bedienereingabeeinheit aufweist, und wobei die Richtung eines jeden Publikumssitzes (200) so eingerichtet ist, dass sie in Abhängigkeit von der Information, die von dem Bediener über die Bedienereingabeeinheit eingegeben wird, änderbar ist.

9. Multiprojektionssystem nach Anspruch 1, wobei der mindestens eine Publikumssitz (200) eine Zusatzeffektvorrichtung aufweist, die eingerichtet ist, um einen Zusatzeffekt auszuführen, der mit den Bildern, die auf die Mehrzahl von Projektionsflächen projiziert werden, zusammenpasst.

10. Multiprojektionssystem nach Anspruch 9, wobei die Zusatzeffektvorrichtung einen Vibrationseffekt, einen Kitzeleffekt, einen Luftstoßeffekt, oder einen Wasserstoßeffekt umfasst.

## Revendications

1. Système multi-projection comprenant :
une pluralité de surfaces de projection (100) pouvant être installées dans un seul cinéma ; au moins un siège de spectateur (200) dont la direction est configurée pour être changée en fonction des images projetées sur la pluralité de surfaces de projection (100) ; et un dispositif de commande de siège (300) pour commander le fonctionnement du au moins un siège de spectateur (200), dans lequel le dispositif de commande de siège (300) est configuré pour transmettre un signal de commande au au moins un siège de spectateur (200), et le signal de commande inclut des informations temporelles et des informations de fonctionnement, lesdites informations de fonctionnement incluant des informations de vitesse de mouvement, de sorte que les sièges de spectateur (200) peuvent être commandés à différentes vitesses en fonction du type d'image,
**caractérisé en ce que** :
la pluralité de surfaces de projection (100) est composés d'un écran et de murs, dans laquelle la pluralité de surfaces de projection (100) sont disposées de manière à ne pas être parallèles les unes aux autres et sont disposées pour entourer le au moins un siège de spectateur (200)
le fonctionnement de chaque siège de spectateur (200) est synchronisé avec les images projetées sur la pluralité de surfaces de projection (100), sur la base d'informations temporelles, de sorte que lorsqu'un objet dans une image projetée sur une première surface de projection se déplace vers une seconde surface de projection, le dispositif de commande de siège (300) est configuré pour commander le siège de spectateur (200) pour changer la direction de vision vers la seconde surface de projection, et
il comprend, en outre, un dispositif de gestion intégré configuré pour corriger le contenu de l'(image, de manière à compenser la différence de propriétés en se basant sur les informations de différence de propriétés entre les deux surfaces de projection (100) ou plus.

2. Système multi-projection selon la revendication 1, dans lequel la direction du au moins un siège de spectateur (200) est configuré pour être changé vers une surface de projection spécifique (100) parmi la pluralité de surfaces de projection (100) par un mouvement de rotation.

3. Système multi-projection selon la revendication 2, dans lequel le au moins un siège de spectateur (200) est configuré pour effectuer le mouvement de rotation sur des axes de rotation présents en trois dimensions, et la direction de chaque siège de spectateur (200) est configurée pour être changée vers chaque surface de projection (100) par le mouvement de rotation.

4. Système multi-projection selon la revendication 2, dans lequel le au moins un siège de spectateur (200) est configuré pour se rapprocher ou s'éloigner de la surface de projection spécifique (100) .

5. Système multi-projection selon la revendication 1, dans lequel, lorsqu'un événement spécifique dans l'image ne se produit que dans une image sur une surface de projection spécifique (100) parmi la pluralité de surfaces de projection (100), la direction du au moins un siège de spectateur (200) est configurée pour être changée vers la surface de projection spécifique (100).

6. Système multi-projection selon la revendication 1, dans lequel le dispositif de commande de siège (300) commande intégralement le un ou plusieurs siège(s) de spectateur(s) (200).

7. Système multi-projection selon la revendication 1, dans lequel les informations de fonctionnement incluent des informations de vitesse, et le dispositif de commande de siège (300) est configuré pour changer les informations de vitesse en fonction des images projetées sur la pluralité de surfaces de projection (100).

8. Système multi-projection selon la revendication 1, dans lequel le au moins un siège de spectateur (200) comprend une unité d'entrée utilisateur, et la direction de chaque siège de spectateur (200) est configurée pour être changée en fonction des informations entrées par l'unité d'entrée utilisateur.

9. Système multi-projection selon la revendication 1, dans lequel le au moins un siège de spectateur (200) comprend un dispositif d'effet additionnel qui est configuré pour mettre en oeuvre un effet additionnel qui apparie les images projetées sur la pluralité de surfaces de projection (100).

10. Système multi-projection selon la revendication 9, dans lequel l'effet additionnel inclut un effet de vibration, un effet de chatouillement, un effet de jet d'air, ou effet de jet d'eau.
